# EUROPÄISCHE PATENTSCHRIFT

(11) **EP 2 516 514 B1**
(45) Veröffentlichungstag und Bekanntmachung des Hinweises auf die Patenterteilung: **11.06.2014**
(21) Anmeldenummer: 10773581.3
(22) Anmeldetag: 25.10.2010
(51) Int. Cl.: C08J 3/00

(54) **VERFAHREN ZUR HERSTELLUNG EINES FLÄCHENFÖRMIGEN GUMMIBELAGS UND FLÄCHENFÖRMIGER GUMMIBELAG**
METHOD FOR PRODUCING A TWO-DIMENSIONAL RUBBER COVERING AND TWO-DIMENSIONAL RUBBER COVERING
PROCÉDÉ DE FABRICATION D'UN REVÊTEMENT EN CAOUTCHOUC PLANIFORME ET REVÊTEMENT EN CAOUTCHOUC PLANIFORME

(30) Priorität: 22.12.2009 DE 102009060440
(43) Veröffentlichungstag der Anmeldung: 31.10.2012
(73) Patentinhaber: Nora Systems GmbH, 69469 Weinheim (DE)
(72) Erfinder: GRUN, Gregor, 69469 Weinheim (DE); KRÖGER, Mario, 76646 Bruchsal (DE)
(74) Vertreter: Reiser & Partner
(86) Internationale Anmeldenummer: PCT/EP2010/006499
(87) Internationale Veröffentlichungsnummer: WO 2011/076306

(56) Entgegenhaltungen:
- EP-A1- 1 127 911
- EP-A1- 1 313 355
- WO-A1-02/16481
- WO-A1-2005/033186
- WO-A1-2007/003513
- WO-A1-2009/048591

## Beschreibung

Die vorliegende Erfindung betrifft ein Verfahren zur Herstellung eines flächenförmigen Gummibelags, insbesondere eines Bodenbelags, mit folgenden Schritten: Bereitstellen eines unvulkanisierten Gummimaterials; Einmischen eines Füllstoffes in das unvulkanisierte Gummimaterial; Überführen des Gummimaterials in einen flächenförmigen Zustand und Vernetzung des Gummimaterials im flächenförmigen Zustand. Die Erfindung bezieht sich darüber hinaus auf einen flächenförmigen Gummibelag.

Ein Verfahren zur Herstellung eines flächenförmigen Gummibelags ist aus der DE 101 56 635 A1 bekannt. Bei dem vorbekannten Verfahren wird ein Füllstoff in ein unvulkanisiertes Gummimaterial eingemischt und die erhaltene Mischung kalandriert, um das Gummimaterial in einen flächenförmigen Zustand zu bringen. Daran anschließend erfolgt die Vernetzung des Gummimaterials.

Die EP 1 313 355 A1 zeigt einen gummibasierten Belag, wobei als Gummimaterial Styrolbutadien-Kautschuk und Acryl-Nitril-Butadien-Kautschuk vorgeschlagen wird. Das Gummimaterial ist mit dem Füllstoff Silikat versehen.

Die WO 2009/048591 A1 beschreibt eine Träger-Elastomerzusammensetzung umfassend einen elastomeren Grundstoff und einen Füller aus pyrolisiertem polymerem Material.

Die WO 2007/000353 A1 beschreibt ein porösvernetztes Kompositmaterial.

Die WO 2005/0033186 A1 beschreibt eine Zusammensetzung enthaltend ein organisches vernetzbares Medium und in nicht vernetztes Mikrogel.

Die WO 02/16481 A1 zeigt ein flexibles Polymer-Element, welches mit Verstärkungsfasern versehen ist.

Die EP 1 127 911 A1 zeigt ein Verfahren zur Herstellung von rußgefüllten Kautschukpulvern.

Es besteht Bedarf an Verfahren zur Herstellung von flächenförmigen Gummibelägen, welche eine gute Verarbeitbarkeit aufweisen. Die Aufgabe der vorliegenden Erfindung besteht daher darin, ein Verfahren der eingangs genannten Art anzugeben, bei dem eine leichte Verarbeitung möglich ist.

Diese Aufgabe wir bei einem eingangs genannten Verfahren dadurch gelöst, dass der Füllstoff recycelte Partikel aus Glas, Porzellan, Steingut und/oder Steinzeug enthält und der Herabsetzung der Viskosität des unvernetzten Gummimaterials dient.

Auf diese Weise kann die Verarbeitbarkeit der unvulkanisierten Gummimischung erheblich verbessert werden. Insbesondere ermöglicht die Verwendung von Partikeln aus Glas, Porzellan, Steingut und Steinzeug eine leichte und effektive Durchmischung der Komponenten. Dies kann u.a. darauf beruhen, dass die Viskosität der Mischung reduziert wird, was die Verarbeitung erleichtert. Hierdurch werden auch die Verarbeitungszeiten reduziert und die Prozesssicherheit erhöht. Gleichzeitig ermöglichen die genannten Stoffe eine Vernetzung des Gummimaterials in kurzer Zeit. Zudem können die Fertigungskosten gering gehalten werden, da die genannten Stoffe nicht nur die einzusetzende Menge des Gummimaterials reduzieren, sondern auch kostengünstig verfügbar sind. Zudem ermöglicht die Verwendung von Partikeln aus Glas, Porzellan, Steingut und Steinzeug, die Menge an anderen in der Gummimischung enthaltenen Stoffen, wie insbesondere Vernetzungsbeschleuniger oder andere Additive, gering zu halten, ohne hierbei die Verarbeitbarkeit oder die Verarbeitungszeit negativ zu beeinflussen. Dies trägt gleichfalls zu einer Kostensenkung bei, da der Einsatz von vergleichsweise teuren Zusatzstoffen gering gehalten wird. Schließlich zeichnen sich Glas, Porzellan, Steingut und Steinzeug auch dadurch aus, unter Umweltgesichtspunkten unproblematisch zu sein. Das erfindungsgemäße Verfahren ermöglicht insbesondere die Herstellung von emissionsarmen Belägen. Mit den vorgeschlagenen Füllstoffen lassen sich hohe Produktqualitäten der Beläge erreichen, die insbesondere als Bodenbeläge geeignet sind. Hierbei lassen sich auch hervorragende mechanische Kennwerte, wie insbesondere Härte, Rückprallelastizität, Zugfestigkeit, Reißdehnung, Weiterreißwiderstand und Abrieb erzielen. Dies gilt sowohl für die Verwendung von Partikeln aus Glas als auch von Partikeln aus Porzellan, Steingut und/oder Steinzeug, welche gebrannte keramische Werkstoffe darstellen.

Erfindungsgemäß sind die Partikel aus Glas, Porzellan, Steingut und/oder Steinzeug recycelte Stoffe. Durch den Einsatz dieser Recycling-Stoffe wird der Einsatz von Ressourcen reduziert und der Energieverbrauch bei der Herstellung gesenkt. Hierbei können z.B. wiederverwertbare Stoffe zum Einsatz kommen, die aus Produktionsabfällen gewonnen werden. Andererseits können auch Stoffe aus Produkten, die ihren Lebenszyklus bereits durchlaufen haben, wie z.B. Altglas, eingesetzt werden.

Eine gute Verarbeitbarkeit und gute Produktqualitäten können insbesondere dann erreicht werden, wenn die Mooney-Viskosität des unvulkanisierten Gummimaterials nach dem Einmischen des Füllstoffes gemessen nach DIN 53523 kleiner als 160 ML (1+4) 100°C ist. Die vorgenannte Mooney-Viskosität wird nach DIN 53523 ermittelt. Die Angabe ML (1+4)100°C bedeutet, dass die Viskosität mit einem Normalrotor entsprechend der DIN, einer Vorwärmzeit von einer Minute und einer Prüfdauer von 4 Minuten bei einer Prüftemperatur der Prüfkammer von 100°C gemessen wird. Vorzugsweise ist die Mooney-Viskosität kleiner als 145 ML (1+4) 100°C und besonders vorzugsweise kleiner als 120 ML (1+4) 100°C.

Eine gute Verarbeitbarkeit und eine gute Haftung der Partikel in dem Gummimaterial kann dann erreicht werden, wenn die Partikel aus Glas, Porzellan, Steingut und/oder Steinzeug als Mahlgut eingemischt werden. Hierbei hat sich bewährt, wenn der d₅₀- Wert einer Korngröße der Partikel zwischen 1µm und 200 µm, insbesondere zwischen 1µm und 20µm liegt. Der d₅₀-Wert gibt als statistischer Medianwert die mittlere Größe der Partikel an. Besonders bewährt hat sich ein d₅₀-Wert der Partikel von 1µm bis 15µm, insbesondere zwischen 10 µm und 12 µm. Das Mahlgut kann Mischungsweise als Glasmehl, Porzellanmehl, Steingutmehl, Steinzeugmehl oder eine Mischung hiervon vorliegen.

Vorteilhafter Weise werden die Partikel aus Glas, Porzellan, Steingut und/oder Steinzeug in einem Anteil von 10 Gew. % bis 80 Gew. % bezogen auf den flächenförmigen Gummibelag eingemischt. Der fertige Gummibelag enthält demnach zwischen 10 Gew.% und 80 Gew.% der Partikel.

Die Vernetzung des Gummibelags kann in vorteilhafter Weise durch Peroxide, Schwefel und/oder Additive erfolgt. Zur Beschleunigung der Vernetzung durch Schwefel können Vernetzungsbeschleuniger oder deren Kombinationen eingesetzt werden. Diese können insbesondere Stoffe der Klassen der Dithiocarbamate, Metallsalze der Dithiocarbamate, Thiurame, Mercaptobeschleuniger, Sulfenamide und/oder Guanidine enthalten.

Die Verarbeitung und insbesondere die Vernetzung wird dann weiter verbessert, wenn die Partikel basische Eigenschaften aufweisen. Insbesondere Partikel aus Glas können basische Eigenschaften aufweisen, welche eine Beschleunigung der Vernetzung ermöglichen. Durch die Verwendung von Partikeln aus Glas kann die Vernetzung durch Schwefel beschleunigt werden. Auf diese Weise kann der Einsatz von Vernetzungsbeschleunigern erheblich reduziert werden, ohne dass dies zu unangemessen langen Vernetzungszeiten führen würde.

Erfindungsgemäß hat sich bewährt, wenn das Gummimaterial SBR (Styrol-Butadien-Kautschuk), NBR (Nitril-Butadien-Kautschuk), HNBR (hydrierter Nitril-butadien-Kautschuk), EPDM (Ethylen-Propylen-Dien-Kautschuk), EPM (Ethylen-Propylen-Kautschuk), EVA (Ethylenvinylacetat), CSM (Chlorsulfonyl-Polyethylen-Kautschuk), CR (Chloropren-Kautschuk), VSI (Silikon-Kautschuk) und/oder AEM (Ethylen-Acrylat-Kautschuk) enthält.

Der nach dem erfindungsgemäßen Verfahren hergestellte flächenförmige Gummibelag, insbesondere für Fußböden, umfasst als Füllstoff eingemischte recycelte Partikel aus Glas, Porzellan, Steingut und/oder Steinzeug.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen Merkmale für sich oder in beliebiger Kombination den Gegenstand der Erfindung, unabhängig von der Zusammenfassung in einzelnen Ansprüchen oder deren Rückbeziehung.

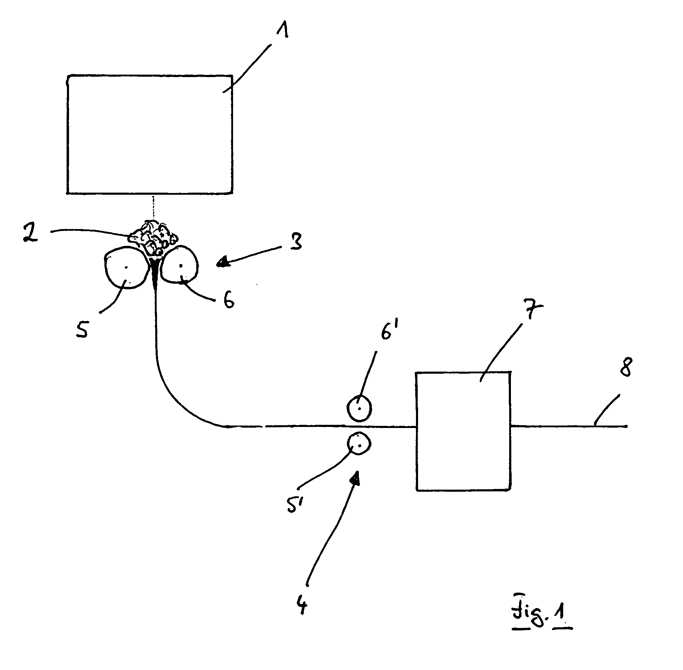

Fig. 1 zeigt schematisch ein erfindungsgemäßes Verfahren zur Herstellung eines flächenförmigen Gummibelags.

Das Verfahren sieht vor, dass zunächst ein unvulkanisiertes Gummimaterial bereitgestellt wird. Hierbei kann es sich insbesondere um SBR (Styrol-Butadien-Kautschuk), NBR (Nitril-Butadien-Kautschuk), HNBR (hydrierter Nitril-butadien-Kautschuk), EPDM (Ethylen-Propylen-Dien-Kautschuk), EPM (Ethylen-Propylen-Kautschuk), EVA (Ethylenvinylacetat), CSM (Chlorsulfonyl-Polyethylen-Kautschuk), CR (Chloropren-Kautschuk), VSI (Silikon-Kautschuk) und/oder AEM (Ethylen-Acrylat-Kautschuk) oder eine Mischung hiervon handeln.

In das unvulkanisierte Gummimaterial wird ein Füllstoff eingemischt. Hierzu wird der Füllstoff zu dem unvulkanisierten Gummimaterial in einen Mischer 1 gegeben, der die Komponenten intensiv vermischt, bis sich eine homogene Durchmischung des Füllstoffes in dem unvulkanisierten Gummimaterial ergibt. Als Füllstoff werden Partikel aus Glas, Porzellan, Steingut und/oder Steinzeug eingesetzt. Dem unvulkanisierten Gummimaterial können darüber hinaus weitere Füllstoffe zugegeben werden. Das Durchmischen kann auch zusätzlich oder alternativ durch Kalandrieren des unvulkanisierten Gummimaterials bewirkt werden. Die Partikel sind wiederverwertete Stoffe und können durch Mahlen von Produkten aus gebranntem Porzellan, gebranntem Steingut oder gebranntem Steinzeug oder durch Mahlen von Glas gewonnen werden. Beispielsweise kann Ausschussware aus Porzellan, Steingut oder Steinzeug zu den Partikeln gemahlen werden, welche dann als Mahlgut dem unvulkanisierten Gummimaterials beigegeben werden. Selbstverständlich können auch Produkte, welche nach Durchlaufen ihres Lebenszyklus gesammelt werden, verwendet werden, wie beispielsweise Altglas, gebrauchtes Porzellan, Steingut oder Steinzeug. Der d₅₀- Wert einer Korngröße dieser Partikel liegt vorzugsweise zwischen 1µm und 200 µm, insbesondere zwischen 1µm und 20µm.

Die Partikel aus Glas, Porzellan, Steingut und/oder Steinzeug werden in einem Anteil von 10 Gew.% bis 80 Gew.% bezogen auf den flächenförmigen Gummibelag eingemischt, so dass der fertige Gummibelag zwischen 10 Gew.% und 80 Gew.% der Partikel enthält.

Das unvulkanisierte Gummimaterial 2 mit den eingemischten Partikeln zeichnet sich durch eine hervorragende Verarbeitbarkeit aus. Diese zeigt sich bereits an der Viskosität des unvulkanisierten Gummimaterials mit den Partikeln. Hier wird eine Mooney-Viskosität von weniger als 160 ML (1+4) 100°C nach DIN 53523 erreicht, vorzugsweise weniger als 145 ML (1+4) 100°C oder weniger als 120 ML (1+4) 100°C. Diese Eigenschaften ermöglichen eine effektive Durchmischung, wobei gleichzeitig die Bildung von Blasen vermieden oder reduziert wird.

In einem darauffolgenden Schritt erfolgt das Überführen des Gummimaterials in einen flächenförmigen Zustand, um einen entsprechenden Belag auszubilden. Dieses Überführen in den flächenförmigen Zustand kann beispielsweise durch Kalandrieren des Gummimaterials mittels der Kalander 3 und 4 erfolgen. Bei der dargestellten Ausführungsform sind zwei Kalander 3,4 vorgesehen, welche jeweils zwei gegensinnig rotierende Kalanderwalzen 5,6 bzw. 5', 6' aufweisen. Hierbei wird das Gummimaterial dadurch auf die gewünschte Dicke gebracht, indem es durch den zwischen den Kalanderwalzen gebildeten Spalt gefördert wird.

Schließlich erfolgt in einem weiteren Schritt die Vernetzung des Gummimaterials, welches sich in dem flächenförmigen Zustand befindet. Die Vernetzung kann insbesondere unter Einwirkung von Hitze und Druck in der Vulkanisiereinrichtung 7 erfolgen. Man erhält auf diese Weise einen flächenförmigen Belag 8 aus vulkanisiertem Gummimaterial. Entweder kann der Belag bereits in der gewünschten Stärke hergestellt werden, oder nach dem Vernetzen erfolgt ein Spalten des hergestellten Belages. Der Belag kann insbesondere auf Böden als Fußbodenbelag eingesetzt werden.

Wird ein Gummimaterial mit einer Schwefelvernetzung eingesetzt, wirken die Glaspartikel als Vernetzungsbeschleuniger. Aus diesem Grund kann der Einsatz anderer Vernetzungsbeschleuniger erheblich reduziert werden.

Die Tabelle 1 zeigt beispielhaft die Zusammensetzung von drei Gummimischungen, die mit Mischung 1, Mischung 2 und Mischung 3 bezeichnet sind. Angegeben sind jeweils die Gewichtsanteile der jeweiligen Bestandteile der Mischung.

**Tabelle 1: Zusammensetzung**

| | **Mischung 1** | **Mischung 2** | **Mischung 3** |
|---|---|---|---|
| Gefällte Kieselsäure | 30 | 30 | 30 |
| Kaolin | - | 160 | 160 |
| Glasmehl | 160 | - | - |
| Gummirecyclat | - | 100 | - |
| Expandiertes Gummirecyclat | - | - | 33,30 |
| SBR mit 23 % Styrolgehalt | 75 | 75 | 75 |
| SBR mit 70% Styrolgehalt | 10 | 10 | 10 |
| Zinkoxid | 3,740 | 3,740 | 3,740 |
| Polyethylenglykol | 1,00 | 1,00 | 1,00 |
| Stearinsäure | 1,00 | 1,00 | 1,00 |
| Paraffin | 1,00 | 1,00 | 1,00 |
| Schwefel | 2,50 | 2,50 | 2,50 |
| Cyclohexylbenzthiazylsulfenamid | 2,00 | 2,00 | 2,00 |
| Tetramethyldiuramdisulfid | 0,00 | 1,30 | 1,30 |

Mischung 1 hat einen Gehalt von 160 Gewichtsanteilen Glasmehl, wobei 85 Gewichtsanteile SBR mit 23 bzw. 70% Styrolgehalt vorgesehen sind. Mischung 2 enthält kein Glasmehl, jedoch 160 Gewichtsanteilen Kaolin und 100 Gewichtsanteile Gummirecyclat als Füllstoff. Mischung 3 ist eine Mischung mit 160 Gewichtsanteilen Teilen Kaolin und 33,30 Gewichtsanteilen expandiertem Gummirecyclat als Füllstoff.

Tabelle 2 zeigt die sich ergebenden Mooney-Werte der Mischungen 1, 2 und 3 vor der Vernetzung. Die Mooney-Viskositäten sind nach der DIN 53523 ermittelt. Teil 3 dieser DIN behandelt vornehmlich die Bestimmung Viskosität nach Mooney und Teil 4 die Bestimmung des Anvulkanisationsverhaltens nach Mooney.

**Tabelle 2: Kennwerte vor Vernetzung**

| | **Mischung 1** | **Mischung 2** | **Mischung 3** |
|---|---|---|---|
| Mooney Viskosität ML (1+4) 100°C | 144 | >170 | 168 |
| Mooney Anvulkanisationszeit t ₅ in min bei 140°C | 4,22 | 2,70 | 3,91 |
| Mooney Viskositätsminimum bei 140°C | 57 | 85 | 59 |

Tabelle 2 lässt erkennen, dass Mischung 1 eine gute Verarbeitbarkeit aufweist. Die Mooney-Viskosität bei 100°C liegt unter 160 Mooney-Einheiten, sogar unter 150 Mooney Einheiten. Bei Mischung 2 hingegen liegt die Mooney-Viskosität so hoch, dass diese nicht mehr gemessen werden kann. Eine Verarbeitung dieser Mischung ist nicht möglich. Auch bei Mischung 3 liegt die Mooney-Viskosität bei 100°C sehr hoch, was eine Verarbeitung erschwert oder unmöglich macht. Die Anvulkanisationszeiten sind hinreichend lang, sodass die Materialien verarbeitet werden können, bevor die Vulkanisation eine weitere Bearbeitung behindert.

Die Tabelle 3 zeigt die mechanischen Kennwerte der Mischungen 1, 2 und 3 nach der Vernetzung.

**Tabelle 3: mechanische Kennwerte nach Vernetzung**

| | **Mischung 1** | **Mischung 2** | **Mischung 3** |
|---|---|---|---|
| Härte [Shore A] | 94 | 93 | 95 |
| Rückprallelastizität | 15 | 18 | 23 |
| Spannwert 20% [MPa] | 3,9 | 5,2 | 5,7 |
| Zugfestigkeit [MPa] | 7,4 | 8,3 | 5,8 |
| Reißdehnung [%] | 85 | 132 | 32 |
| Weiterreißwiderstand [N/mm] | 4,8 | | 4,9 |

Tabelle 3 lässt erkennen, dass Mischung 1 gute mechanische Kennwerte aufweist, so dass sich der Belag hervorragend als widerstandsfähiger Bodenbelag auch für hohe Beanspruchung eignet.

Tabelle 4 zeigt beispielhaft die Zusammensetzung von weiteren Mischungen 4 - 8 mit jeweils unterschiedlichen Anteilen der Füllstoffe Glasmehl, Porzellanmehl und/oder Kaolin.

**Tabelle 4: Zusammensetzung weiterer Mischungen**

| | **Mischung 4** | **Mischung 5** | **Mischung 6** | **Mischung 7** | **Mischung 8** |
|---|---|---|---|---|---|
| Gefällte Kieselsäure | 15,40 | 15,40 | 15,40 | 15,40 | 15,40 |
| Kaolin | 154,875 | - | - | 77,44 | - |
| Glasmehl | - | 154,875 | 154,875 | - | 77,44 |
| Porzellanmehl | - | - | - | 77,44 | 77,44 |
| SBR mit 23 % | 41 | 41 | 41 | 41 | 41 |
| Styrolgehalt | | | | | |
| SBR mit 70% | 18 | 18 | 18 | 18 | 18 |
| Styrolgehalt | | | | | |
| Zinkoxid | 5,120 | 5,120 | 5,120 | 5,120 | 5,120 |
| Polyethylenglykol | 5,00 | 5,00 | 5,00 | 5,00 | 5,00 |
| Stearinsäure | 1,55 | 1,55 | 1,55 | 1,55 | 1.55 |
| Paraffin | 0,50 | 0,50 | 0,50 | 0,50 | 0,50 |
| Schwefel | 3,00 | 3,00 | 3,00 | 3,00 | 3,00 |
| Cyclohexylbenzthiazylsulfenamid | 1,00 | 1,00 | 1,00 | 1,00 | 1,00 |
| Tetramethyldiuramdisulfid | 1,00 | 1,00 | 0,00 | 1,00 | 1,00 |

Tabelle 5 zeigt die Mooney-Werte der Mischungen 4 bis 8. Deutlich erkennbar ist hier die gute Verarbeitbarkeit der Mischungen mit Partikeln aus Glas oder Porzellan.

**Tabelle 5: Kennwerte vor Vernetzung der Mischungen 4 bis 8**

| | **Mischung 4** | **Mischung 5** | **Mischung 6** | **Mischung 7** | **Mischung 8** |
|---|---|---|---|---|---|
| Mooney Viskosität ML (1+4) 100°C | 89 | 108 | 86 | 71 | 71 |
| Mooney Anvulkanisationszeit t ₅ in min bei 140°C | 3,95 | 0,75 | 7 | 3,34 | 0,86 |
| Mooney Viskositätsminimum bei 140°C | 31 | 38 | 11 | 26 | 33 |

Tabelle 6 zeigt die Vulkanisationseigenschaften der Mischungen 4 bis 8. Die Glasmehl enthaltende Mischung 5 lässt erkennen, dass hier die Vulkanisationszeiten im Vergleich mit der Mischung 4 erheblich beschleunigt werden. Selbst wenn einer der Vulkanisationsbeschleuniger (Tetramethyldiuramdisulfid) weggelassen wird, wie dies bei der ansonsten mit Mischung 5 identischen Mischung 6 der Fall ist, werden immer noch sehr gute Vulkanisationseigenschaften erreicht. Ein vergleichbare Beschleunigung der Vulkanisation tritt bei der Mischungen 7, welche kein Glasmehl enthält nicht auf. Mischung 8, bei der Partikel aus Glas und Porzellan vorgesehen sind, belegt wiederum die beschleunigende Wirkung der Glaspartikel, auch wenn diese in Kombination mit Porzellanpartikeln vorgesehen werden. Auf diese Weise ist es möglich, durch den Anteil an Glaspartikeln die Vulkanisation zu beschleunigen bzw. dieselben Vulkanisationszeiten mit geringeren Mengen an Vulkanisationsbeschleunigern zu erreichen.

**Tabelle 6: Vulkameter (170°C, 6') der Mischungen 4 bis 8**

| | **Mischung 4** | **Mischung 5** | **Mischung 6** | **Mischung 7** | **Mischung 8** |
|---|---|---|---|---|---|
| ti[s] | 55 | 19 | 50 | 52 | 24 |
| t20[s] | 61 | 23 | 58 | 57 | 28 |
| t90[s] | 189 | 61 | 182 | 86 | 121 |
| t20/t90[s] | 0,32 | 0,38 | 0,32 | 0,66 | 0,23 |
| D min | 0,27 | 0,31 | 0,33 | 0,23 | 0,26 |
| D max | 2,57 | 1,93 | 2,05 | 2,24 | 2,08 |
| delta D | 2,30 | 1,62 | 1,72 | 2,01 | 1,82 |

Tabelle 7 belegt die guten mechanischen Eigenschaften der Beläge, welche Partikel aus Glas oder Porzellan enthalten.

**Tabelle 7: mechanische Kennwerte nach Vernetzung der Mischungen 4 bis 8**

| | **Mischung 4** | **Mischung 5** | **Mischung 6** | **Mischung 7** | **Mischung 8** |
|---|---|---|---|---|---|
| Härte [Shore A] | 96 | 91 | 93 | 94 | 92 |
| Rückprallelastizität | 25 | 29 | 28 | 28 | 26 |
| Spannwert 20% [MPa] | 6,3 | 3,1 | 3,5 | 4,9 | 3,2 |
| Zugfestigkeit [MPa] | 7,8 | 4,7 | 4,5 | 5,5 | 4,1 |
| Reißdehnung [%] | 48 | 198 | 202 | 64 | 135 |
| Weiterreißwiderstand [N/mm] | 4,4 | 3,3 | 3,8 | 3,9 | 3,1 |

## Patentansprüche

1. Verfahren zur Herstellung eines flächenförmigen Gummibelags, insbesondere eines Bodenbelags, mit folgenden Schritten:
- Bereitstellen eines unvulkanisierten Gummimaterials,
- Einmischen eines Füllstoffes in das unvulkanisierte Gummimaterial,
- Überführen des Gummimaterials in einen flächenförmigen Zustand,
- Vernetzung des Gummimaterials im flächenförmigen Zustand,
**dadurch gekennzeichnet, dass** der Füllstoff recycelte Partikel aus Glas, Porzellan, Steingut und/oder Steinzeug enthält und der Herabsetzung der Viskosität des unvernetzten Gummimaterials dient.

2. Verfahren nach Anspruch 1, **dadurch gekennzeichnet, dass** die Mooney-Viskosität des unvulkanisierten Gummimaterials nach dem Einmischen des Füllstoffes gemessen nach DIN 53523 kleiner als 160 ML (1+4) 100°C ist.

3. Verfahren nach Anspruch 2, **dadurch gekennzeichnet, dass** die Mooney-Viskosität des unvulkanisierten Gummimaterials nach dem Einmischen des Füllstoffes gemessen nach DIN 53523 kleiner als 145 ML (1+4) 100°C und insbesondere kleiner als 120 ML (1+4) 100°C ist.

4. Verfahren nach einem der Ansprüche 1 bis 3, **dadurch gekennzeichnet, dass** die Partikel aus Glas, Porzellan, Steingut und/oder Steinzeug als Mahlgut eingemischt werden.

5. Verfahren nach Anspruch 4, **dadurch gekennzeichnet, dass** der d₅₀-Wert einer Korngröße der Partikel zwischen 1 und 200 µm, insbesondere zwischen 1 und 20µm liegt.

6. Verfahren nach einem der Ansprüche 1 bis 5, **dadurch gekennzeichnet, dass** die Partikel aus Glas, Porzellan, Steingut und/oder Steinzeug in einem Anteil von 10 Gew.% bis 80 Gew.% bezogen auf den flächenförmigen Gummibelag eingemischt werden.

7. Verfahren nach einem der Ansprüche 1 bis 6, **dadurch gekennzeichnet, dass** die Vernetzung des Gummibelags durch Peroxid, Schwefel und/oder Additive erfolgt.

8. Verfahren nach Anspruch 7, **dadurch gekennzeichnet, dass** zur Beschleunigung der Vernetzung durch Schwefel Vernetzungsbeschleuniger oder Kombinationen hiervon eingesetzt wird, die insbesondere Stoffe der Klassen der Dithiocarbamate, der Metallsalze der Dithiocarbamate, der Thiurame, der Mercaptobeschleuniger, der Sulfenamide und/oder der Guanidine enthalten.

9. Verfahren nach einem der Ansprüche 1 bis 8, **dadurch gekennzeichnet, dass** die Partikel basische Eigenschaften aufweisen.

10. Verfahren nach einem der Ansprüche 1 bis 9, **dadurch gekennzeichnet, dass** durch die Partikel aus Glas die Vernetzung durch Schwefel beschleunigt wird.

11. Verfahren nach einem der Ansprüche 1 bis 10, **dadurch gekennzeichnet, dass** das Gummimaterial SBR (Styrol-Butadien-Kautschuk), NBR (Nitril-Butadien-Kautschuk), HNBR (hydrierter Nitril-butadien-Kautschuk), EPDM (Ethylen-Propylen-Dien-Kautschuk), EPM (Ethylen-Propylen-Kautschuk), EVA (Ethylenvinylacetat), CSM (Chlorsulfonyl-Polyethylen-Kautschuk), CR (Chloropren-Kautschuk), VSi (Silikon-Kautschuk) und/oder AEM (Ethylen-Acrylat-Kautschuk) enthält.

## Claims

1. Process for the production of a rubber covering in sheet form, in particular of a floor covering, with the following steps:
- provision of an unvulcanized rubber material,
- incorporation of a filler into the unvulcanized rubber material by mixing,
- conversion of the rubber material to sheet form,
- crosslinking of the rubber material in sheet form,
**characterized in that** the filler comprises recycled particles made of glass, porcelain, earthenware and/or stoneware, and serves to reduce the viscosity of the uncrosslinked rubber material.

2. Process according to Claim 1, **characterized in that** the Mooney viscosity of the unvulcanized rubber material after incorporation of the filler by mixing is smaller than 160 ML (1 +4) 100 °C, measured in accordance with DIN 53523.

3. Process according to Claim 2, **characterized in that** the Mooney viscosity of the unvulcanized rubber material after incorporation of the filler by mixing is smaller than 145 ML (1 +4) 100 °C, measured in accordance with DIN 53523, and in particular is smaller than 120 ML (1 +4) 100°C.

4. Process according to any of Claims 1 to 3, **characterized in that** the particles made of glass, porcelain, earthenware and/or stoneware take the form of ground material when they are incorporated by mixing.

5. Process according to Claim 4, **characterized in that** the d₅₀ value of a grain size of the particles is from 1 to 200 µm, in particular from 1 to 20 µm.

6. Process according to any of Claims 1 to 5, **characterized in that** the particles made of glass, porcelain, earthenware and/or stoneware are incorporated by mixing at a proportion of from 10% by weight to 80% by weight, based on the rubber covering in sheet form.

7. Process according to any of Claims 1 to 6, **characterized in that** the crosslinking of the rubber covering is achieved via peroxide, sulphur and/or additives.

8. Process according to Claim 7, **characterized in that** the crosslinking is accelerated by using sulphur crosslinking accelerators or a combination thereof, these in particular comprising substances from the classes of the dithiocarbamates, of the metal salts of the dithiocarbamates, of the thiurams, of the mercapto accelerators, of the sulphenamides and/or of the guanidines.

9. Process according to any of Claims 1 to 8, **characterized in that** the particles have basic properties.

10. Process according to any of Claims 1 to 9, **characterized in that** the sulphur crosslinking is accelerated by the particles made of glass.

11. Process according to any of Claims 1 to 10, **characterized in that** the rubber material comprises SBR (styrene-butadiene rubber), NBR (nitrile-butadiene rubber), HNBR (hydrogenated nitrile-butadiene rubber), EPDM (ethylenepropylene-diene rubber), EPM (ethylene-propylene rubber), EVA (ethylene-vinyl acetate), CSM (chlorosulphonyl polyethylene rubber), CR (chloroprene rubber), VSi (silicone rubber) and/or AEM (ethylene-acrylate rubber).

## Revendications

1. Procédé pour la production d'un revêtement plan en caoutchouc, en particulier un revêtement de sol, présentant les étapes suivantes :
- mise à disposition d'un matériau de caoutchouc non vulcanisé,
- incorporation d'une charge dans le matériau en caoutchouc non vulcanisé,
- transformation du matériau de caoutchouc en un état plan,
- réticulation du matériau de caoutchouc dans l'état plan,
**caractérisé en ce que** la charge contient des particules recyclées de verre, de porcelaine, de faïence et/ou de grès et sert à abaisser la viscosité du matériau de caoutchouc non vulcanisé.

2. Procédé selon la revendication 1, **caractérisé en ce que** la viscosité de Mooney du matériau de caoutchouc non vulcanisé après l'incorporation de la charge, mesurée selon la norme DIN 53523, est inférieure à 160 ML (1+4) 100°C.

3. Procédé selon la revendication 2, **caractérisé en ce que** la viscosité de Mooney du matériau de caoutchouc non vulcanisé après l'incorporation de la charge, mesurée selon la norme DIN 53523, est inférieure à 145 ML (1+4) 100°C et en particulier inférieure à 120 ML (1+4) 100°C.

4. Procédé selon l'une quelconque des revendications 1 à 3, **caractérisé en ce que** les particules de verre, de porcelaine, de faïence et/ou de grès sont incorporées sous forme de produit broyé.

5. Procédé selon la revendication 4, **caractérisé en ce que** la valeur d₅₀ d'une grosseur de grain des particules se situe entre 1 et 200 µm, en particulier entre 1 et 20 µm.

6. Procédé selon l'une quelconque des revendications 1 à 5, **caractérisé en ce que** les particules de verre, de porcelaine, de faïence et/ou de grès sont incorporées en une proportion de 10% en poids à 80% en poids par rapport au revêtement plan de caoutchouc.

7. Procédé selon l'une quelconque des revendications 1 à 6, **caractérisé en ce que** la réticulation du revêtement en caoutchouc a lieu par un peroxyde, du soufre et/ou des additifs.

8. Procédé selon la revendication 7, **caractérisé en ce qu'**on utilise, pour accélérer la réticulation par du soufre, des accélérateurs de réticulation ou des combinaisons de ceux-ci, qui contiennent en particulier des substances des classes des dithiocarbamates, des sels métalliques des dithiocarbamates, des thiurames, des accélérateurs mercapto, des sulfénamides et/ou des guanidines.

9. Procédé selon l'une quelconque des revendications 1 à 8, **caractérisé en ce que** les particules présentent des propriétés basiques.

10. Procédé selon l'une quelconque des revendications 1 à 9, **caractérisé en ce que** la réticulation par du soufre est accélérée par les particules de verre.

11. Procédé selon l'une quelconque des revendications 1 à 10, **caractérisé en ce que** le matériau de caoutchouc contient du SBR (caoutchouc de styrène-butadiène), du NBR (caoutchouc de nitrile-butadiène), du HNBR (caoutchouc de nitrile-butadiène hydrogéné), de l'EPDM (caoutchouc d'éthylène-propylène-diène), de l'EPM (caoutchouc d'éthylène-propylène), de l'EVA (acétate d'éthylènevinyle), du CSM (caoutchouc de chlorosulfonyl-polyéthylène), du CR (caoutchouc de chloroprène), du VSi (caoutchouc de silicone) et/ou de l'AEM (caoutchouc d'éthylène-acrylate).
